Europäisches Patentamt

European Patent Office

Office européen des brevets

(19)

(11) **EP 0 640 267 B1**

(12) **FASCICULE DE BREVET EUROPEEN**

(45) Date de publication et mention
de la délivrance du brevet:
**14.07.1999 Bulletin 1999/28**

(51) Int Cl.⁶: **H04N 5/445**

(21) Numéro de dépôt: **94909147.4**

(22) Date de dépôt: **04.03.1994**

(86) Numéro de dépôt international:
**PCT/FR94/00238**

(87) Numéro de publication internationale:
**WO 94/21080 (15.09.1994 Gazette 1994/21)**

(54) **DISPOSITIF D'AFFICHAGE DE CARACTERES DANS UN SYSTEME VIDEO**

VORRICHTUNG ZUM ANZEIGEN VON ZEICHEN IN EINEM VIDEOSYSTEM

VIDEO SYSTEM CHARACTER DISPLAY DEVICE

(84) Etats contractants désignés:
**DE ES FR GB IT**

(30) Priorité: **12.03.1993 FR 9302869**

(43) Date de publication de la demande:
**01.03.1995 Bulletin 1995/09**

(73) Titulaire: **THOMSON multimedia**
**92648 Boulogne Cédex (FR)**

(72) Inventeur: **QUEINNEC, Olivier**
**F-92400 Courbevoie (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 342 803**         **EP-A- 0 449 106**
**WO-A-86/06910**          **US-A- 5 128 765**

- **R.C.A. TECHNICAL NOTES no. 1374 , Avril 1986
, PRINCETON, NEW JERSEY, USA W. M.
WEBSTER 'Simultaneous television and
computer image display'**
- **PATENT ABSTRACTS OF JAPAN vol. 13, no. 439
(E-827)3 Octobre 1989 & JP,A,11 066 694
(SANYO ELECTRIC CO., LTD.) 30 Juin 1989**

## Description

La présente invention concerne un dispositif d'affichage de caractères dans un système vidéo, lesdits caractères pouvant être affichés en transparence sur un fond constitué par l'image de télévision normale. L'utilisation de l'invention est particulièrement avantageuse lorsque le signal vidéo analogique correspondant à l'image de fond est codé selon un standard imposant que l'information de chrominance soit modulée en fréquence.

L'invention concerne le domaine de la télévision et de ses applications périphériques.

De plus en plus d'appareils vidéo (magnétoscopes, lecteurs de disques laser vidéo, décodeurs) font appel à l'affichage de texte à l'écran pour faciliter l'échange d'informations avec l'utilisateur. De tels textes peuvent comprendre des menus de programmation, des messages d'état, du télétexte pour ne citer que quelques exemples. Dans ce but, lesdits appareils comprennent un générateur de caractères dont le rôle est d'insérer dans le signal vidéo les informations correspondant au texte à afficher.

Les documents US-A-5 128 765 et « Patent Abstracts of Japan, Vol.13, N°439, 3 octobre 1989, Sanyo Electric Co. (JP-A-11 066 694) » décrivent notamment des dispositiffs permettant de mixer un signal vidéo issu d'un magnétoscope ou d'un tuner de téléviseur avec un signal provenant d'une source différente, par exemple un générateur de caractères.

L'ensemble du dispositif de génération de texte fournit alors soit un signal RGB, soit un signal codé suivant un standard particulier (par exemple PAL, NTSC, SECAM). L'insertion de texte, par exemple dans un signal vdéo composite bande de base (appelé signal CVBS par la suite) est faite en multiplexant de manière connue de l'homme de l'art, le signal CVBS avec les paliers de luminance correspondant aux caractères à afficher. On remplace donc à des moments déterminés l'information vidéo du signal CVBS (luminance et chrominance) par une information de luminance différente.

L'introduction des paliers écrase l'information couleur (chrominance) initialement présente. Selon les standards PAL et NTSC, la chrominance est modulée en amplitude. Lors des paliers de luminance dus au texte, l'amplitude du signal de chrominance est nulle ; le texte à l'écran est simplement d'un gris plus ou moins sombre. En SECAM, la chrominance est modulée en fréquence. Or, les paliers de luminance , généralement élevés, introduisent des variations de fréquence dans le signal CVBS. En conséquence, on constate l'apparition de nombreux défauts de chrominance à l'écran, défauts qui entraînent une gêne considérable dans la lecture du texte et/ou dans le confort visuel.

Une solution connue utilisée pour réduire les défauts de chrominance consiste à prélever, avant l'insertion de texte, l'information de chrominance dans le signal CVBS d'entrée grâce à un filtre passe-bande ciblé sur la fréquence centrale de la chrominance. Cette information est ensuite réinjectée dans le signal vidéo contenant le texte inséré. Cette façon de procéder est utilisée en mode de fonctionnement dit "MODE MIXTE", une partie de l'écran comportant du texte, l'autre partie de l'image. Le texte prend alors la couleur de l'image. Le niveau de luminance du texte est choisi élevé pour présenter une bonne visibilité. Cette solution présente des inconvénients. L'amplitude de l'information de chrominance varie en effet aussi bien lorsqu'on se trouve en présence de texte qu'en présence d'une partie du signal CVBS d'origine, ce qui peut causer une dégradation du signal De plus, il est préférable dans des systèmes multistandard, de ne mettre en oeuvre le filtre passe-bande que pour un standard du type SECAM pour lequel la chrominance est modulée en fréquence. On prévoit de ce fait un interrupteur au niveau de la dérivation du filtre passe-bande pour mettre celui-ci hors service au moment voulu. Il faut de plus prévoir une logique de commande de cet interrupteur qui doit aussi s'ouvrir lorsqu'on désire afficher un texte en l'absence de tout signal CVBS ou lorsque le signal vidéo est élaboré uniquement par le générateur de texte, ceci pour empêcher que le signal CVBS ne perturbe le texte. Ce dernier mode est dit "MODE PLEINE PAGE". De plus, le filtre passe-bande comporte une capacité et une self, éléments difficilement intégrables.

Le coût de cette solution est donc non négligeable.

Dans les dispositifs mettant en oeuvre des générateurs de caractères habituels, le texte inséré occulte totalement les parties de l'image correspondantes. Ceci peut être gênant notamment dans le cas où un menu de réglage de l'image par télécommande occulte une grande partie de cette image, ou lorsqu'on désire garder un texte affiché tout en voulant suivre le programme normal.

Le document R.C.A. Technical Notes, N°1374, Avril 1986, W.M. Webster, divulgue quant à lui un dispositif permettant de visualiser simultanément l'image issue d'un ordinateur et celle issue d'un tuner de téléviseur en mixant les signaux vidéo issus des deux sources différentes. Cependant, ce dispositif présente l'inconvénient d'altérer en permanence le signal vidéo issu du tuner de téléviseur en ne permettant pas de mélanger les signaux dans certaines parties de l'image seulement.

L'invention a pour but d'atténuer ces inconvénients.

Ce but est réalisé par un dispositif d'affichage de caractères dans un système vidéo, selon la revendication 1.

Grâce à l'invention, l'information de chrominance n'est pas écrasée, dans le signal résultant , mais simplement atténuée. Un filtre passe-bande n'est plus nécessaire.

La luminance de l'image originale est aussi prise en compte. Elle se retrouve également de façon atténuée en superposition sur l'information de luminance correspondant au texte. Le résultat à l'écran est un effet de transparence du texte ; le spectateur a l'impression de voir l'image originale à travers un filtre laiteux ou sombre suivant la luminance du texte. On peut donc suivre un programme de télévision tout en ayant accès au texte affiché.

Un autre avantage est qu'en dehors des zones de texte, le signal est identique au signal d'origine.

De plus, le dispositif conforme à l'invention s'utilise aussi avec des standards n'employant pas la modulation de fréquence pour coder la chrominance. On peut ainsi bénéficier de l'effet de la transparence également dans ce cas.

Selon un mode de réalisation particulier, l'utilisateur a le choix entre visualiser ledit signal vidéo pondéré résultant ou le signal vidéo dans lequel on a inséré le texte. Lorsque le choix porte sur ce dernier signal, l'image résultante présente un texte opaque habituel.

Selon un mode de réalisation particulier, le signal pondéré est utilisé au moins lorsque le signal vidéo original est un signal vidéo bande de base dans lequel la chrominance est modulée en fréquence.

Selon un mode de réalisation particulier, la pondération est effectuée par deux résistances en série soumises à la différence de tension entre le signal vidéo avec texte et le signal vidéo original, le signal présent au point milieu entre les deux résistances étant le signal pondéré désiré. L'utilisation de résistances permet une intégration plus facile du dispositif.

D'autres avantages et caractéristiques de l'invention apparaîtront à travers la description d'un mode de réalisation particulier illustré de manière non limitative par les figures annexées, parmi lesquelles :

- la figure 1 représente un diagramme fonctionnel d'un dispositif d'affichage de caractères conforme à l'invention ;
- la figure 2 représente une variante de réalisation du dispositif de la figure 1, comprenant un dispositif de réinsertion de synchronisation.

Sur les figures, les mêmes éléments portent les mêmes références.

Selon le mode de réalisation représenté, le signal d'entrée du dispositif est un signal de vidéo composite bande de base (dit signal CVBS).

Selon un autre mode de réalisation, le signal d'entrée du dispositif est un signal de luminance comprenant aussi une synchronisation (dit signal Y). Un signal de télévision noir et blanc ou un signal de luminance au standard SVHS en sont des exemples.

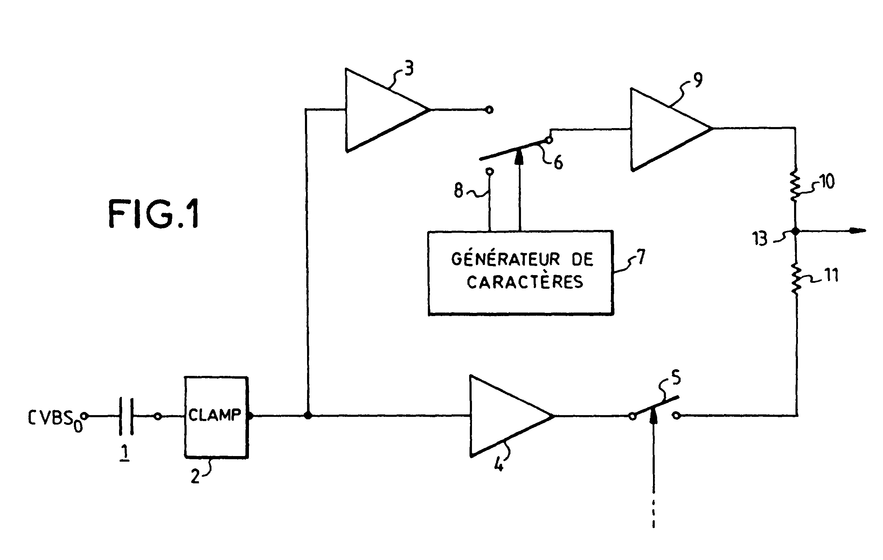

Tel qu'illustré à la figure 1, le dispositif d'affichage conforme à l'invention comporte un circuit de clampage 2, clampant le signal d'entrée (CVBS 0) à une tension de référence. Le circuit de clampage 2 collabore avec un condensateur de clampage 1. Le signal clampé est fourni en parallèle à deux amplificateurs de sortie (3 et 4) servant d'adaptateurs d'impédance. La première branche de circuit ainsi formée comporte en outre, à la sortie de l'amplificateur 4, une commande "tri-state" 5, contrôlée par un circuit non représenté dont la fonction sera décrite ultérieurement. Lorsqu'on désire obtenir un texte "transparent", la commande 5 conduit normalement et se comporte comme un interrupteur fermé.

La seconde branche de circuit comporte, après l'amplificateur 3, un interrupteur 6 contrôlé par un générateur de caractères 7. L'interrupteur relie l'entrée d'un amplificateur d'adaptation 9 soit à la sortie de l'amplificateur 3, soit à une ligne 8 dont la tension est contrôlée par le générateur de caractères 7. La sortie de l'amplificateur 9 est reliée à une borne d'une résistance 10, la sortie de la commande 5 est reliée à une borne d'une résistance 11. Les deux autres bornes des résistances 10 et 11 sont reliées et forment la borne de sortie 13 du circuit.

Le générateur de caractères 7 est synchronisé sur les fréquences ligne, trame et point-image (pixel) élaborées de manière connue par un extracteur de synchronisation et une boucle à verrouillage de phase à partir du signal CVBS 0. Le générateur de caractères 7 comporte entre autres une RAM contenant le texte à afficher, une ROM contenant les matrices des caractères, ainsi qu'un circuit de base de temps horizontale et verticale. Ladite base de temps permet de générer les adresses nécessaires pour la lecture de la RAM contenant le texte à afficher (par exemple sous forme de code ASCII). Le générateur de caractères 7 comporte aussi un circuit de luminance, qui à partir des matrices de caractères fournies par ladite ROM, élabore un signal de luminance. Ce signal varie dans le temps et comporte des paliers de luminance suivant le type d'insertion à effectuer (fond de caractère ou forme de caractère par exemple). Le signal de luminance est présent sur la ligne 8. Lorsqu'une insertion doit avoir lieu, le générateur 7 actionne l'interrupteur 6 par l'intermédiaire d'un signal d'insertion ("dit signal de Fast Blanking") de manière à relier la ligne 8 à l'entrée de l'amplificateur 9. On remplace donc au moment voulu une partie du signal vidéo par le signal de luminance du générateur de caractères 7.

Le générateur de caractères 7 décrit ci-dessus n'est donné qu'à titre d'exemple. Il est bien évident que des générateurs d'une constitution différente peuvent être employés. Le problème de l'insertion en soi d'un texte dans un signal vidéo est connu par ailleurs et pour cette raison, le fonctionnement du générateur de caractères en soi ne sera pas décrit outre mesure. Il est à noter d'autre part que le générateur de caractères 7 décrit ci-dessus fournit uniquement un signal d'insertion de luminance. Un générateur de caractères ayant la capacité de générer du texte couleur est bien sûr envisageable.

Si l'on dénomme CVBS 1 le signal présent sur la borne de la résistance 10 reliée à l'amplificateur 9 et CVBS 2 le signal présent sur la borne de la résistance 11 reliée à la commande 5, le signal CVBS 3 récupéré à la borne 13 est donnée par la relation :

$$CVBS\ 3 = \frac{R11 \times CVBS\ 1 + R10 \times CVBS\ 2}{R11 + R10}$$

où R10 et R11 représentent respectivement les valeurs des résistances 10 et 11.

CVBS 3 est donc une moyenne pondérée des signaux CVBS 1 et CVBS 2. Lorsqu'aucun texte n'est inséré dans CVBS 1, on aura l'égalité entre les signaux CVBS 1 et CVBS 2, et le signal de sortie CVBS 3 sera égal au signal d'entrée CVBS clampée; aucune modification n'a lieu.

En présence de texte, une moyenne pondérée est effectuée entre d'une part la luminance correspondant au texte et la luminance et chrominance du signal CVBS d'origine. A l'écran, cela se traduit d'une part par un effet de transparence du texte, d'autre part par une atténuation des défauts de chrominance engendrés par l'insertion, l'information de chrominance n'étant pas éliminée, mais simplement atténuée.

Lorsque la commande 5 est mise en état de haute impédance, seul le signal CVBS 1 parvient au point 13. Tout se passe comme si la résistance 11 était infinie. En conséquence, on aura égalité entre CVBS 3 et CVBS 1. Un texte inséré apparaîtra opaque à l'écran, l'image sous-jacente ayant été supprimée.

Selon un mode de réalisation préférentiel, la commande 5 conduit lorsque le signal d'entrée CVBS 0 est un signal vidéo composite dont l'information chrominance est modulée en fréquence. Ceci est le cas d'un signal SECAM. Pour d'autres types de signaux, tels que les signaux PAL et NTSC, on peut laisser à l'utilisateur, par l'intermédiaire de la télécommande de l'appareil comprenant le dispositif conforme à l'invention, le choix entre un texte en mode opaque ou en mode transparent.

Selon un mode de réalisation particulier, les résistances 10 et 11 sont telles que :

$$\frac{R\ 11}{R\ 10} = 3$$

Ces valeurs correspondent à des coefficients de pondération de 3/4 et 1/4 respectivement pour le signal avec texte opaque et le signal original. Ceci constitue un bon compromis entre lisibilité du texte et transparence, lorsque le niveau de luminance des caractères est choisi proche du blanc et le niveau de luminance du fond des caractères est choisi proche du noir.

Selon un mode de réalisation particulier, le rapport de la valeur des resistances peut être modifié, notamment en fonction du standard du signal vidéo codé. Cette modification peut être effectuée par exemple en dérivant le signal CVBS1 vers une autre résistance que la résistance 10, mais également connectée au point 13.

Selon un mode de réalisation particulier, les coéfficients de pondération de 3/4 et de 1/4 respectivement pour le signal avec texte opaque et le signal original sont utilisés en liaison avec les standards PAL et NTSC.

Selon un mode de réalisation particulier, on utilise des coéfficients de pondération de 2/3 et de 1/3 respectivement pour le signal avec texte opaque et le signal original en liaison avec le standard SECAM.

Dans le choix des résistances, on tiendra compte des paliers de luminance choisi pour le texte.

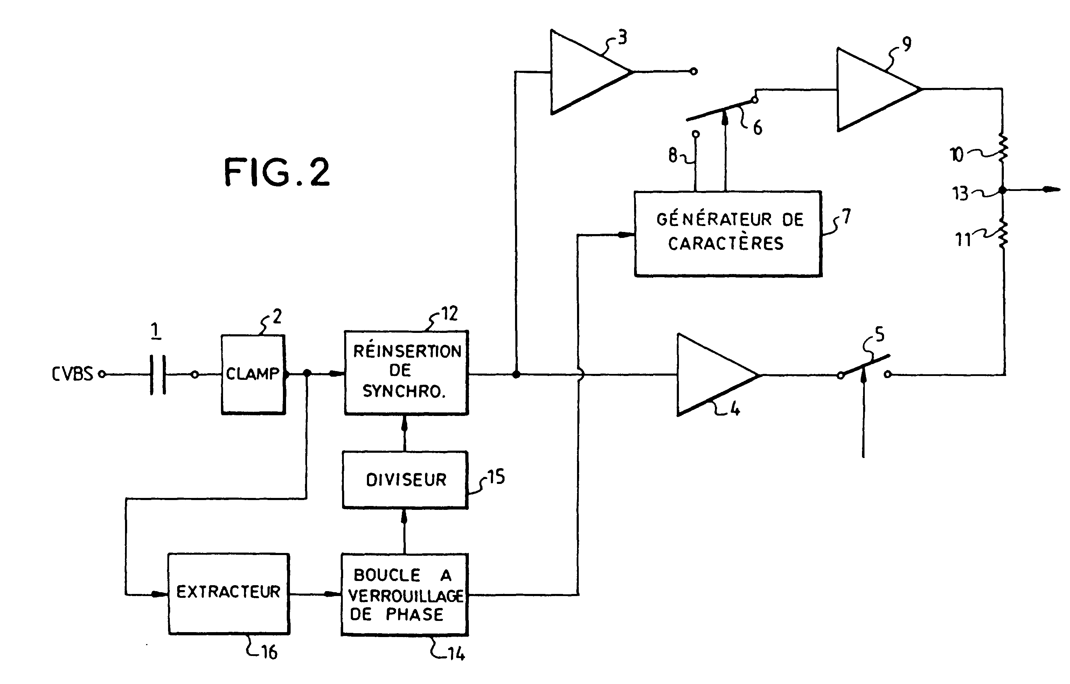

Selon un mode de réalisation particulier, le dispositif conforme à l'invention comporte une réinsertion de synchronisation. Ce mode de réalisation est illustré à la figure 2. Un circuit de réinsertion de synchronisation 12 est positionné entre le clamp 2 et les amplificateurs 3 et 4. Ce circuit 12 reçoit à partir d'un diviseur 15 un signal issu de la boucle à verrouillage de phase 14 correspondant à la fréquence des signaux de synchronisation ligne. La boucle 14 reçoit le signal de synchronisation extrait du signal d'entrée par un extracteur 16.

La réinsertion de synchronisation 12 a pour rôle de réinsérer, à partir de l'horloge issue de la boucle à verrouillage de phase 14, une synchronisation dans le signal vidéo clampé. Ceci peut être utile lorsque le signal d'entrée présente des impulsions de synchronisation dont la phase varie ("jitter"). Si une réinsertion n'était pas effectuée, le "jitter" apparaîtrait entre les signaux de synchronisation contrôlant le générateur de caractères 7 et les signaux de synchronisation du signal vidéo clampé, ceci ayant pour résultat un alignement vertical déplorable des lignes de texte.

L'essentiel est que l'embranchement conduisant aux amplificateurs 3 et 4 soit placé après le circuit de réinsertion pour qu'à l'entrée des résistances 10 et 11, les signaux correspondants soient bien en phase.

## Revendications

1.  Dispositif d'affichage de caractères dans un système vidéo comportant une borne d'entrée recevant un signal vidéo (CVBS 0) et des moyens (6) pour insérer du texte dans le signal vidéo (CBVS 0) d'origine,
    caractérisé en ce qu'il comporte en outre des moyens (10, 11) pour effectuer une moyenne pondérée dudit signal vidéo d'origine dans lequel le texte a été inséré (CVBS 1) et du même signal vidéo d'origine (CVBS 0, CVBS 2) et pour fournir à une borne de sortie (13) le signal vidéo pondéré (CVBS 3).

2.  Dispositif selon la revendication 1, caractérisé en ce qu'il comporte en outre des moyens (5) permettant d'obtenir sur la borne de sortie (13) l'un parmi le signal vidéo pondéré ou le signal vidéo (CVBS 1) dans lequel le texte a été inséré.

3.  Dispositif selon l'une des revendications 1 ou 2, caractérisé en ce que ladite moyenne pondérée est effectuée lorsque le signal d'entrée (CVBS 0) du dispositif est un signal vidéo composite bande de base ou un signal de luminance comprenant une synchronisation.

4. Dispositif selon l'une des revendications précédentes, caractérisé en ce que ladite moyenne pondérée est effectuée au moins lorsque le signal vidéo d'entrée (CVBS 0) du dispositif est un signal vidéo composite bande de base dans lequel la chrominance est modulée en fréquence.

5. Dispositif selon la revendication 4, caractérisé en ce que ledit signal vidéo d'entrée (CVBS 0) est un signal au standard SECAM.

6. Dispositif selon l'une des revendications précédentes, caractérisé en ce que la moyenne pondérée est effectuée en récupérant le signal vidéo pondéré au point milieu (13) de deux résistances (10, 11) recevant respectivement le signal vidéo original (CVBS 0, CVBS 2) et le signal vidéo dans lequel le texte à afficher a été inséré (CVBS 1).

7. Dispositif selon l'une des revendications précédentes, caractérisé en ce qu'il comprend un circuit de clampage (2) relié à une capacité de clampage (1), le signal clampé alimentant deux branches de circuit en parallèle, l'une de ces branches comportant un générateur de caractères (7) insérant le texte à afficher dans le signal vidéo d'origine (CVBS 0) de cette première branche, l'autre branche comportant une commande "tri-state" (5).

8. Dispositif selon l'une des revendications précédentes, caractérisé en ce que l'insertion de texte dans le signal vidéo est effectuée par un générateur de texte (7) insérant des paliers de luminance correspondant au texte à afficher.

9. Dispositif selon l'une des revendications précédentes, caractérisé en ce qu'il comprend un circuit de réinsertion de synchronisation de type connu.

10. Dispositif selon l'une des revendications précédentes, caractérisé en ce que les coefficients de pondération sont de 3/4 pour le signal vidéo d'origine dans lequel le texte a été inséré (CVBS 1) et de 1/4 pour le signal vidéo original (CVBS 0, CVBS 2).

11. Dispositif selon la revendication 10, caractérisé en ce que les coefficients 3/4 et 1/4 sont utilisés pour des signaux aux standards PAL ou NTSC.

12. Dispositif selon l'une des revendications 1 à 9, caractérisé en ce que les coefficients de pondération sont de 2/3 pour le signal vidéo dans lequel le texte a été inséré et de 1/3 pour le signal vidéo original.

13. Dispositif selon la revendication 12, caractérisé en ce que les coefficients 2/3 et 1/3 sont utilisés pour des signaux au standard SECAM.

**Patentansprüche**

1. Vorrichtung zur Anzeige von Zeichen in einem Videosystem mit einer ein Videosignal (CVBS 0) empfangenden Eingangsklemme und mit Mitteln (6) zum Einfügen des Textes in das ursprüngliche Videosignal (CVBS 0),
dadurch gekennzeichnet, daß außerdem Mittel (10,11) vorgesehen sind, um eine gewichtete Mittelung des ursprünglichen Videosignals, in das der Text eingefügt worden ist, (CVBS 1) und desselben ursprünglichen Videosignals (CVBS 0, CVBS 2) zu bewirken und an einer Ausgangsklemme (13) das gewichtete Videosignal (CVBS 3) zu liefern.

2. Vorrichtung nach Anspruch 1, dadurch gekennzeichnet, daß sie außerdem Mittel (5) enthält, die es ermöglichen, an der Ausgangsklemme (13) das gewichtete Videosignal oder das Videosignal (CVBS 1) zu erhalten, in das der Text eingefügt worden ist.

3. Vorrichtung nach einem der Ansprüche 1 oder 2, dadurch gekennzeichnet, daß die gewichtete Mittelung durchgeführt wird, wenn das Eingangssignal (CVBS 0) der Vorrichtung ein zusammengesetztes Basisband-Videosignal oder ein ein Synchronsignal enthaltendes Luminanzsignal ist.

4. Vorrichtung nach einem der vorangehenden Ansprüche, dadurch gekennzeichnet, daß die gewichtete Mittelung wenigstens dann durchgeführt wird, wenn das Eingangs-Videosignal (CVBS 0) der Vorrichtung ein zusammengesetztes Basisband-Videosignal ist, in dem die Chrominanz in der Frequenz moduliert ist.

5. Vorrichtung nach Anspruch 4, dadurch gekennzeichnet, daß das Eingangs-Videosignal (CVBS 0) ein Signal gemäß der SECAM-Norm ist.

6. Vorrichtung nach einem der vorangehenden Ansprüche, dadurch gekennzeichnet, daß die gewichtete Mittelung dadurch erfolgt, daß das gewichtete Videosignal am Mittelpunkt (13) von zwei Widerständen (10, 11) gewonnen wird, denen das ursprüngliche Videosignal (CVBS 0, CVBS 2) beziehungsweise das Videosignal zugeführt wird, in das der anzuzeigenden Text eingefügt worden ist (CVBS 1).

7. Vorrichtung nach einem der vorangehenden Ansprüche, dadurch gekennzeichnet, daß sie eine Klemmschaltung (2) mit einer Klemmkapazität (1) enthält, daß das geklemmte Signal parallel zwei Schaltungswege versorgt, wobei einer dieser Wege einen Zeichengenerator (7) enthält, der den anzuzeigenden Text in das ursprüngliche Videosignal (CVBS 0) dieses ersten Weges einfügt, und daß der andere Weg ein "Drei-Zustands-Steuerteil " (5) enthält.

8. Vorrichtung nach einem der vorangehenden Ansprüche, dadurch gekennzeichnet, daß die Einfügung des Textes in das Videosignal durch einen Zeichengenerator (7) erfolgt, der Luminanzstufen entsprechend dem anzuzeigenden Text einfügt.

9. Vorrichtung nach einem der vorangehenden Ansprüche, dadurch gekennzeichnet, daß sie eine bekannte Schaltung zum Wiedereinfügen der Synchronsignale enthält.

10. Vorrichtung nach einem der vorangehenden Ansprüche, dadurch gekennzeichnet, daß die Wichtungskoeffizienten 3/4 für das ursprüngliche Videosignal, in das der Text eingefügt worden ist (CVBS 1), und 1/4 für das ursprüngliche Videosignal (CVBS 0, CVBS 2) betragen.

11. Vorrichtung nach Anspruch 10, dadurch gekennzeichnet, daß die Koeffizienten 3/4 und 1/4 für Signale nach den Normen PAL oder NTSC angewendet werden.

12. Vorrichtung nach einem der Ansprüche 1 bis 9, dadurch gekennzeichnet, daß die Wichtungskoeffizienten 2/3 für das Videosignal, in das der Text eingefügt worden ist, und 1/3 für das ursprüngliche Videosignal betragen.

13. Vorrichtung nach Anspruch 12, dadurch gekennzeichnet, daß die Koeffizienten 2/3 und 1/3 für Signale nach der SECAM-Norm angewendet werden.

**Claims**

1. Device for displaying characters in a video system including an input terminal receiving a video signal (CVBS 0) and means (6) for inserting text into the original video signal (CVBS 0), characterized in that it further includes means (10, 11) for forming a weighted average of said original video signal into which the text has been inserted (CVBS 1) and of the same original video signal (CVBS 0, CVBS 2), and for supplying the weighted video signal (CVBS 3) to an output terminal (13).

2. Device according to Claim 1, characterized in that it further includes means (5) making it possible to obtain, on the output terminal (13), either the weighted video signal or the video signal (CVBS 1) into which the text has been inserted.

3. Device according to either of Claims 1 and 2, characterized in that said weighted average is formed when the input signal (CVBS 0) of the device is a composite, video base band signal or a luminance signal including synchronization.

4. Device according to one of the preceding claims, characterized in that said weighted average is formed at least when the input video signal (CVBS 0) of the device is a composite video base band signal in which the chrominance is frequency modulated.

5. Device according to Claim 4, characterized in that said input video signal (CVBS 0) is a signal to the SECAM standard.

6. Device according to one of the preceding claims, characterized in that the weighted average is formed by recovering the weighted video signal at the mid point (13) of two resistors (10, 11) receiving respectively the original video signal (CVBS 0, CVBS 2) and the video signal into which the text to be displayed has been inserted (CVBS 1).

7. Device according to one of the preceding claims, characterized in that it comprises a clamping circuit (2) linked to a clamping capacitor (1), the clamped signal feeding two circuit branches in parallel, one of these branches including a character generator (7) inserting the text to be displayed into the original video signal (CVBS 0) of this first branch, the other branch including a "tri-state" control (5).

8. Device according to one of the preceding claims, characterized in that the insertion of text into the video signal is performed by a text generator (7) inserting luminance plateaux corresponding to the text to be displayed.

9. Device according to one of the preceding claims, characterized in that it comprises a synchronization reinsertion circuit of known type.

10. Device according to one of the preceding claims, characterized in that the weighting coefficients are 3/4 for the original video signal into which the text has been inserted (CVBS 1) and 1/4 for the original video signal (CVBS 0, CVBS 2).

11. Device according to Claim 10, characterized in that the 3/4 and 1/4 coefficients are used for signals to the PAL or NTSC standards.

12. Device according to one of Claims 1 to 9, characterized in that the weighting coefficients are 2/3 for the video signal into which the text has been inserted and 1/3 for the original video signal.

13. Device according to Claim 12, characterized in that the 2/3 and 1/3 coefficients are used for signals to the SECAM standard.

# FIG.1

FIG.2

EP 0 640 267 B1